# EUROPEAN PATENT APPLICATION

(11) **EP 2 479 639 A1**
(43) Date of publication of application: **25.07.2012**
(21) Application number: 11151391.7
(22) Date of filing: 19.01.2011
(51) Int. Cl.: G06F 1/20, G06F 3/02

(54) **Keyboard with adjusting function and computer system utilizing the same**

(71) Applicant: Giga-Byte Technology, Taipei County 231 (TW)
(72) Inventor: Chen, Shu-I, Taipei County (TW); Shih, Po-Jen, Taipei County (TW)
(74) Representative: Schwerbrock, Florian

(57) **Abstract**

A keyboard adjusting heat dissipation efficiency of a heat dissipation unit disposed in a host device and including a switching unit, a control unit, and a communication port is disclosed. The switching unit is switched to different states. The control unit generates a control signal according to the state of the switching unit. The communication port transmits the control signal to the host device. The host device adjusts the heat dissipation efficiency of the heat dissipation unit according to the control signal.

## Description

### BACKGROUND OF THE INVENTION

### Field of the Invention

The invention relates to a peripheral device, and more particularly to a keyboard controlling heat dissipation efficiency of a heat dissipation unit in a host device.

### Description of the Related Art

With the development of technology, popularity of personal computers has increased. However, the host device of the personal computer is generally closed. When the host device operates, the inside elements of the host device generate heat such that temperature of the host device is increased. When the temperature of the host device is too high, the personal computer may easily crash or malfunction.

To avoid the high temperature, a conventional method is to dispose a heat dissipation unit in the host device. However, the control method of the heat dissipation unit is not easily operated. Thus, a user may utilize specific application software to adjust the heat dissipation efficiency of the heat dissipation unit. However, since the heat of the host device can not be immediately released, a personal computer may still easily crash or malfunction.

### BRIEF SUMMARY OF THE INVENTION

In accordance with an embodiment, a keyboard, which adjusts heat dissipation efficiency of a heat dissipation unit disposed in a host device, comprises a switching unit, a control unit, and a communication port. The switching unit is switched to different states. The control unit generates a control signal according to the state of the switching unit. The communication port transmits the control signal to the host device. The host device adjusts the heat dissipation efficiency of the heat dissipation unit according to the control signal.

In accordance with another embodiment, a computer system comprises a host device, a keyboard and a control unit. The host device comprises a heat dissipation unit. The keyboard comprises a switching unit. The control unit generates a control signal according to state of the switching unit. The host device adjusts heat dissipation efficiency of the heat dissipation unit according to the control signal.

A detailed description is given in the following embodiments with reference to the accompanying drawings.

### BRIEF DESCRIPTION OF THE DRAWINGS

The invention can be more fully understood by referring to the following detailed description and examples with references made to the accompanying drawings, wherein:

FIG. 1 is a schematic diagram of an exemplary embodiment of a computer system of the invention;

FIG. 2 is an outward schematic diagram of an exemplary embodiment of a keyboard of the invention; and

FIG. 3 is a block diagram of an exemplary embodiment of a computer system of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

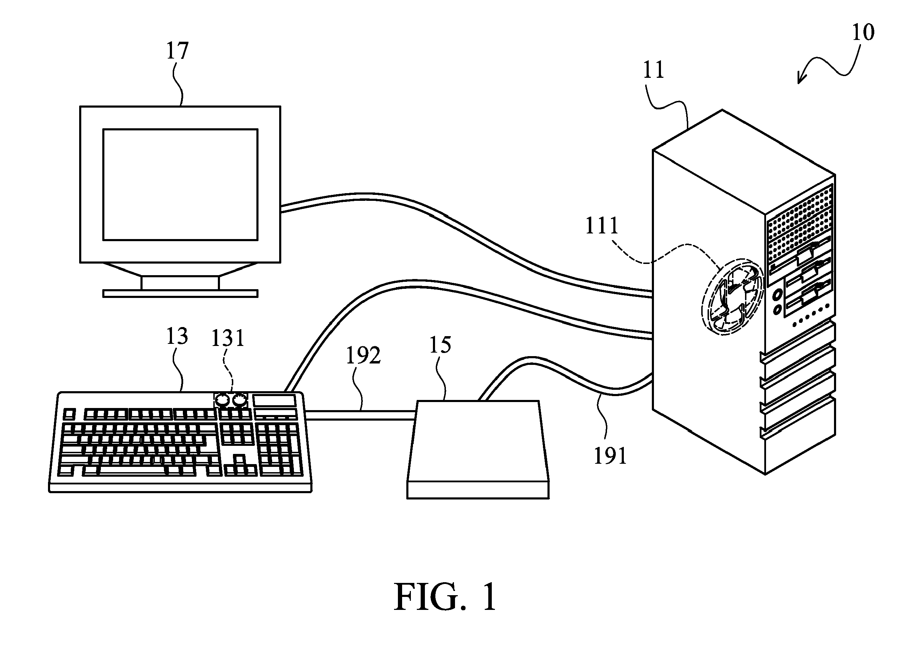

FIG. 1 is a schematic diagram of an exemplary embodiment of a computer system. The computer system 10 comprises a host device 11, a keyboard 13, a control unit 15 and a monitor 17. The host device 11 comprises a heat dissipation unit 111. In this embodiment, the heat dissipation unit 111 comprises at least one heat dissipation element. Each heat dissipation element releases heat from different electronic elements. The invention does not limit the kind of the heat dissipation element. In some embodiments, the heat dissipation element is an active heat dissipation element, such as a fan or a water cooler.

In this embodiment, the keyboard 13 comprises a switching unit 131 to adjust the heat dissipation efficiency of the heat dissipation unit 111 such that the heat inside of the host device 11 is immediately released. In one embodiment, the switching unit 131 comprises at least one analog switch and/or at least one digital switch. The invention does not limit the kind of the analog switch and the digital switch. The analog switch is a multiple stage turning knob, a DIP switch or a button. The digital switch comprises a touch panel.

The control unit 15 is coupled between the keyboard 13 and the host device 11. The control unit 15 generates a control signal according to the state of the switching unit 131. The connecting line 191 transmits the control signal to the host device 11. The host device 11 adjusts the heat dissipation efficiency of the heat dissipation unit 111 according to the received control signal.

For example, when the temperature of the host device is increased, a user adjusts the state of the switching unit 131 to increase the heat dissipation efficiency of the heat dissipation unit 111 such that the heat inside of the host device 11 is immediately released. On the contrary, when the temperature of the host device is reduced, a user adjusts the state of the switching unit 131 to reduce the heat dissipation efficiency of the heat dissipation unit 111 such that the power consumption is reduced.

In this embodiment, the host device 11 monitors temperature. A user utilizes specific application software in BIOS or in an OS to obtain the current temperature of the host device 11. In one embodiment, the monitor 17 displays the current temperature of the host device 11. In another embodiment, the keyboard 13 comprises a display panel to display the current temperature of the host device 11 and/or the operation state of the heat dissipation unit 111.

In this embodiment, the control unit 15 comprises a pulse-width modulated (PWM) integrated circuit (IC). Thus, the control signal generated by the control unit 15 is a PWM signal. As shown in FIG. 1, the control unit 15 is designed outside of the keyboard 13. In another embodiment, the control unit 15 is integrated into the keyboard 13. In this case, the connection lint 192 can be omitted.

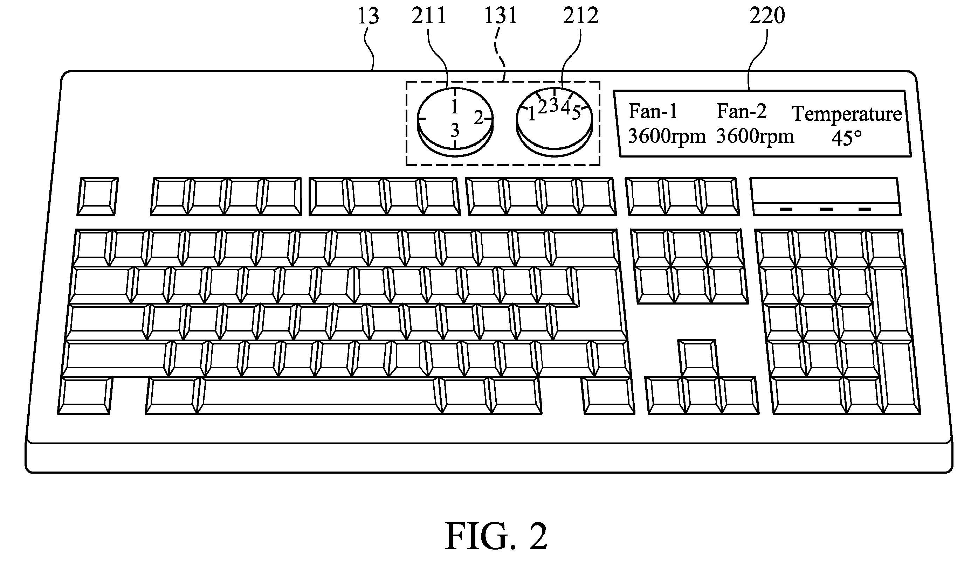

FIG. 2 is an outward schematic diagram of an exemplary embodiment of a keyboard of the invention. In this embodiment, the switching unit 131 comprises switches 211 and 212. The switch 211 selects one of heat dissipation elements of the heat dissipation unit 111. For example, assuming that the heat dissipation unit 111 comprises various heat dissipation elements. The switch 211 is utilized to select and adjust one of the heat dissipation elements. Contrarily, if the heat dissipation elements are not respectively controlled, the switch 211 can be omitted.

The switch 212 is utilized to adjust heat dissipation efficiency of a specific heat dissipation element. When the switch 211 activates one heat dissipation element, the switch 212 adjusts the heat dissipation efficiency of the activated heat dissipation element. In another embodiment, if the switch 211 is omitted, the switch 212 adjusts the heat dissipation efficiency of all heat dissipation elements.

In this embodiment, the switches 211 and 212 are multiple stage turning knobs, but the disclosure is not limited thereto. In other embodiments, the kind of the switch 211 is different from the kind of the switch 212.

In this embodiment, the keyboard 13 further comprises a display panel 220. The display panel 220 is capable of displaying the heat dissipation efficiency of the heat dissipation elements (e.g. fan-1 and fan-2). In other embodiments, the display panel 220 is further capable of displaying the temperature inside of the host device 11 such that the heat dissipation efficiency of the heat dissipation elements are immediately adjusted to prevent the temperature inside of the host device 11 from becoming too high.

In this embodiment, the switches 211 and 212 are utilized to select and adjust the specific heat dissipation element. In other embodiments, the display panel 220 is utilized to select one of the heat dissipation elements and adjust the selected heat dissipation element. For example, the display panel 220 is a touch panel. A user touches the display panel 220 to select and adjust at least one heat dissipation element.

In other embodiments, the switching unit 131 not only adjusts the heat dissipation efficiency of the heat dissipation unit 111, but also provides a switching function. In one embodiment, the switching unit 131 comprises a mode switch (not shown). When the mode switch is switched to a manual state, the host device 11 adjusts the heat dissipation efficiency of the heat dissipation unit 111 according to the control signal generated by the control unit 15. When the mode switch is switched to an auto state, the host device 11 auto-adjusts the heat dissipation efficiency of the heat dissipation unit 111.

In anther embodiment, the switch 211 not only selects one specific heat dissipation element, but also selects a manual state or a auto state. For example, when the switch 211 is switched to the auto state, a controller (not shown) of the host device 11 adjusts the heat dissipation efficiency of the heat dissipation unit 111. When the switch 211 is deviated from the auto state, the host device 11 adjusts the heat dissipation efficiency of the heat dissipation unit 111 according to the output signal of the control unit 15.

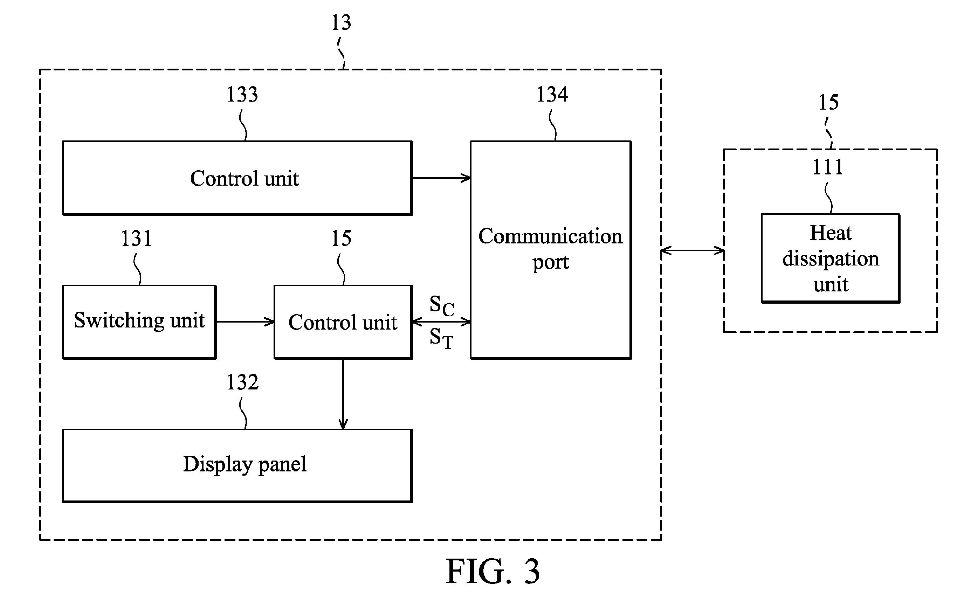

FIG. 3 is a block diagram of an exemplary embodiment of the computer system. In this embodiment, the control unit 15 is integrated into the keyboard 13, but the disclosure is not limited thereto. In other embodiments, the control unit 15 is designed outside of the keyboard 13. As shown in FIG. 3, the keyboard 13 comprises a switching unit 131, a display panel 132, control units 15, 133 and a communication port 134.

The control unit 133 comprises a keyboard controller (KBS) to transmit a key signal to the host device 11. The key signal corresponds to a pressed key. The operation of the SKB is well known to those skilled in the art, thus, description thereof is omitted.

The control unit 15 generates a control signal S_{c} according to the state of the switching unit 131. The communication port 134 transmits the control signal S_{c} to the host device 11. The host de3vice 11 adjusts the heat dissipation efficiency of the heat dissipation unit 111. Furthermore, the communication port 134 transmits key information output from the control unit 133 to the host device 11.

The display panel 132 displays the temperature inside of the host device 11. In this embodiment, the host device 11 transmits temperature information S_{T} to the control unit 15 via the communication port 134. The control unit 15 controls the display panel 132 according to the temperature information S_{T} such that the display panel 132 displays the temperature inside of the host device 11.

In other embodiments, the host device 11 transmits the heat dissipation efficiency of the heat dissipation unit 111 to the control unit 15 via the communication port 134. The control unit 15 controls the display panel 132 such that the display panel 132 displays the heat dissipation efficiency of the heat dissipation unit 111. In some embodiments, the display panel can be omitted to save costs. In other embodiments, other devices (e.g. monitor) are utilized to display the temperature of the host device 11 or display the heat dissipation efficiency of the heat dissipation unit 111.

A user can easily utilize the keyboard of the invention to adjust heat dissipation efficiency of a heat dissipation unit in a host device and the user does not need to move body substantially. Since the heat dissipation efficiency of the heat dissipation unit is immediately adjusted, the heat inside of the host device can be immediately released to prevent crashing or malfunction and reduce power consumption. Therefore, convenience for a user is increased.

While the invention has been described by way of example and in terms of the preferred embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A keyboard adjusting heat dissipation efficiency of a heat dissipation unit disposed in a host device, comprising:
a switching unit switched to different states;
a control unit generating a control signal according to the state of the switching unit; and
a communication port transmitting the control signal to the host device, wherein the host device adjusts the heat dissipation efficiency of the heat dissipation unit according to the control signal.

2. The keyboard as claimed in claim 1, further comprising:
a display panel displaying temperature of the host device, wherein the host device transmits temperature information to the control unit via the communication port, and the control unit activates the display panel according to the temperature information.

3. The keyboard as claimed in claim 1, wherein the host device transmits heat dissipation information to the control unit via the communication port, and the control unit activates the display panel according to the heat dissipation information such that the display panel displays the heat dissipation efficiency of the heat dissipation unit.

4. The keyboard as claimed in claim 1, wherein the control unit comprises a pulse-width modulated (PWM) integrated circuit (IC), and the control signal is a PWM signal.

5. The keyboard as claimed in claim 1, wherein the switching unit comprises an analog switch or a digital switch.

6. The keyboard as claimed in claim 5, wherein the analog switch is a turning knob, a DIP switch or a button.

7. The keyboard as claimed in claim 5, wherein the digital switch is a touch panel.

8. A computer system, comprising:
a host device comprising a heat dissipation unit;
a keyboard comprising a switching unit; and
a control unit generating a control signal according to state of the switching unit, wherein the host device adjusts heat dissipation efficiency of the heat dissipation unit according to the control signal.

9. The computer system as claimed in claim 8, wherein the control unit is integrated into the keyboard.

10. The computer system as claimed in claim 8, further comprising:
a display panel displaying temperature of the host device.

11. The computer system as claimed in claim 10, wherein the display panel further displays the heat dissipation efficiency of the heat dissipation unit.

12. The computer system as claimed in claim 10, wherein the display panel is integrated into the keyboard.

13. The computer system as claimed in claim 8, wherein the control unit comprises a pulse-width modulated (PWM) integrated circuit (IC), and the control signal is a PWM signal.
